# FASCICULE DE BREVET EUROPEEN

(11) **EP 3 828 465 B1**
(45) Date de publication et mention de la délivrance du brevet: **25.05.2022**
(21) Numéro de dépôt: 20209400.9
(22) Date de dépôt: 24.11.2020
(51) Int. Cl.: F23G 5/36, C10J 3/72, B01J 19/12, F23G 7/12, F23G 7/10, C10J 3/46, C10J 3/48

(54) **RÉACTEUR SOLAIRE À JET, DESTINÉ À LA CONVERSION THERMOCHIMIQUE D'UNE CHARGE CARBONÉE, À ÉVACUATION DES CENDRES AMÉLIORÉE, PROCÉDÉ DE FONCTIONNEMENT ASSOCIÉ, APPLICATION À LA GAZÉIFICATION DE BIOMASSE OU AU REFORMAGE**
SOLARSTRAHLREAKTOR FÜR DIE THERMOCHEMISCHE UMWANDLUNG EINES KOHLENSTOFFHALTIGEN AUSGANGSMATERIALS MIT VERBESSERTER ENTASCHUNG, ENTSPRECHENDES FUNKTIONSVERFAHREN UND ANWENDUNG FÜR DIE VERGASUNG ODER REFORMIERUNG VON BIOMASSE
SOLAR REACTOR WITH JET, INTENDED FOR THE THERMOCHEMICAL CONVERSION OF A CARBONACEOUS FILLER, WITH IMPROVED DISCHARGE OF ASH, METHOD FOR OPERATION THEREOF, APPLICATION TO GASIFICATION OF BIOMASS OR REFORMING

(30) Priorité: 26.11.2019 FR 1913239
(43) Date de publication de la demande: 02.06.2021
(73) Titulaire: Commissariat à l'Energie Atomique et aux Energies Alternatives, 75015 Paris (FR)
(72) Inventeur: BOUJJAT, Houssame, 38054 GRENOBLE (FR); CHANDEZ, Bertrand, 38054 GRENOBLE (FR); RODAT, Sylvain, 38054 GRENOBLE (FR)
(74) Mandataire: Nony

(56) Documents cités:
- WO-A1-2015/191019
- WO-A2-2012/083097
- Quentin Bellouard: "Valorisation de biomasse en vecteur énergétique par voie thermochimique solaire", , 10 novembre 2017 (2017-11-10), XP055709732, Extrait de l'Internet: URL:https://www.infothek-biomasse.ch/image s//349_2017_Bellouard_Valorisation-biomass e-par-thermochimique-solaire.pdf [extrait le 2020-06-29]

## Description

### Domaine technique

La présente invention concerne le domaine des réacteurs dit « solaires », c'est-à-dire utilisant au moins en partie l'énergie du rayonnement solaire qui est concentrée en tant qu'apport de l'énergie nécessaire à une réaction chimique endothermique.

Plus particulièrement, l'invention a trait à une amélioration d'un type de réacteur solaire, à jet, en vue d'améliorer l'évacuation des cendres en fusion.

L'application principale visée par un réacteur solaire selon l'invention est la conversion thermochimique d'une charge carbonée, en particulier un hydrocarbure ou une biomasse, en un gaz de synthèse contenant majoritairement de l'hydrogène (H2) et du monoxyde de carbone (CO), en vue de produire des carburants liquides (Diesel Fischer-Tropsch "FT", Diméthyl éther "DME", Méthanol) ou gazeux (gaz naturel synthétique, "SNG" ou "Synthetic Natural Gas" en anglais) ou autres produits chimiques de synthèse, tels que le méthanol par exemple ou bien en hydrocarbures insaturées et/ou aromatiques tels que des produits issus du vapocraquage des coupes pétrolières légères.

On désigne sous l'appellation « charge carbonée », tout matériau combustible constitué de composés contenant du carbone.

Il peut donc s'agir de biomasse, c'est-à-dire tout matériau inhomogène d'origine végétale contenant du carbone, tel que de la biomasse ligno-cellulosique, des résidus forestiers ou agricoles (paille), qui peut être quasi-sec ou imbibé d'eau comme les déchets ménagers.

Il peut aussi s'agir d'un hydrocarbure, en particulier un combustible d'origine fossile, tel que le charbon.

Il peut aussi s'agir de déchets combustibles d'origine industrielle contenant du carbone, tel que des matières plastiques ou des pneumatiques.

II peut aussi s'agir d'une combinaison de biomasse et de combustible d'origine fossile. D'autres applications peuvent être envisagées. Par exemple, le reformage peut être mis en œuvre avantageusement par un réacteur solaire selon l'invention.

De manière générale, toute réaction chimique endothermique peut être mise en œuvre par l'invention.

### Technique antérieure

Les réacteurs dits « solaires » sont des réacteurs chimiques adaptés pour convertir au moins en partie l'énergie du rayonnement solaire concentré en de la chaleur afin de mettre en œuvre des réactions endothermiques de type reformage, gazéification, décarbonatation, craquage....

De l'art antérieur, on connaît bon nombre de conceptions de réacteurs solaires adaptés à plusieurs réactions chimiques ou de manière privilégiée pour un type de réaction. On peut citer ici la publication [1], qui fait une revue générale des conceptions de tous les réacteurs solaires connus, ou encore la publication [2] qui se focalise sur les réacteurs solaires adaptés particulièrement au reformage ou encore la publication [3] qui détaille ceux pour la gazéification.

De manière générale, il existe trois types de réacteurs solaires : ceux à lits fluidisés, ceux à lits fixes et ceux à flux entraînés.

Indépendamment du type de réacteur, on distingue deux grandes familles de réacteurs à savoir les réacteurs à chauffage par ensoleillement direct et les réacteurs à chauffage par ensoleillement indirect. La distinction se fait sur la façon dont les réactifs vont recevoir le flux solaire. Dans le cas d'un ensoleillement direct, les réactifs sont directement exposés au flux solaire concentré, ce qui permet d'atteindre de hauts niveaux de température, en fonction du facteur de concentration.

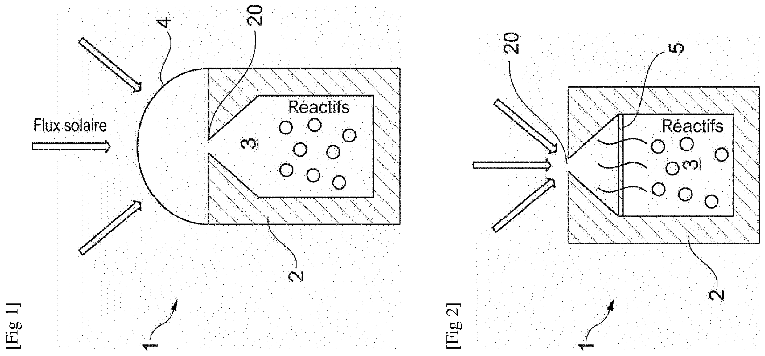

On a représenté schématiquement en figure 1, un réacteur solaire 1 à chauffage direct. Un tel réacteur 1 comprend une enveloppe 2 délimitant la chambre de réaction 3 dans laquelle sont présents les réactifs de la réaction endothermique à réaliser. Un hublot transparent 4 de concentration du rayonnement solaire est monté sur le dessus de l'enveloppe 2. Ce hublot transparent 4 sépare donc la chambre de réaction 3 de l'air extérieur et laisse passer le flux solaire, qui passe concentré à travers l'ouverture 20 dédiée en haut de la chambre 2. Cependant, ce type de technologie nécessite l'utilisation d'une fenêtre ou d'un hublot transparent. La présence de cette surface transparente peut s'avérer handicapante si les flux de réactifs et de produits (gaz, char, goudrons) sont mal gérés. En effet, la salissure de cette surface peut entraîner son opacification et donc sa surchauffe sous l'effet du flux concentré. Il s'avère donc nécessaire de maintenir propre cette fenêtre ou hublot transparent, ce qui crée une difficulté opérationnelle.

A l'inverse, dans le cas d'un ensoleillement indirect, c'est une paroi opaque qui reçoit le flux solaire concentré et le transmet par rayonnement infrarouge aux réactifs à l'intérieur du réacteur ce qui évite tout problème lié à la présence d'un hublot. En revanche, l'utilisation d'une paroi de transfert induit de plus fortes pertes thermiques dans le réacteur du fait de la réémission d'une partie du rayonnement absorbé vers l'extérieur. Certaines technologies de réacteur solaire pour la gazéification de biomasse permettent la conception de réacteur fonctionnant en mode de chauffage direct ou indirect mais pour d'autres seul un type d'ensoleillement est possible.

On a représenté schématiquement en figure 2, un réacteur solaire 1 à chauffage indirect. Ici, une paroi opaque 5 est fixée dans l'enveloppe 2 et délimite avec celle-ci la chambre de réaction 3.

Les réacteurs dits à jet sont développés depuis des décennies pour des procédés qui impliquent des gaz et des particules solides, notamment pour le séchage de céréales. Ses caractéristiques sont intéressantes en termes d'hydrodynamique.

Il existe deux types de réacteurs à jet, les premiers à avoir vu le jour sont les réacteurs à jet classiques [4]. Ces réacteurs ont une enveloppe délimitant la chambre de réaction, qui a une forme cylindro-conique. Dans ces réacteurs, le lit de particules se répartit à la fois dans la zone conique et la zone cylindrique au-dessus qui définissent toutes deux la chambre de réaction. Le choix du diamètre d'entrée de gaz est un paramètre clé pour la stabilité et la cohérence du jet [5] . En fonction des propriétés des particules à fluidiser, de la hauteur du lit et de l'angle de la base conique, le diamètre d'entrée devrait être dimensionné afin de permettre un brassage régulier et cyclique du lit de particules. Un mauvais dimensionnement a pour conséquence l'impossibilité de fonctionner dans un régime cyclique stable (régime dit de « spouting » en anglo-saxon). Le cas échéant, le jet central disparait et des bulles de gaz apparaissent ce qui pénalise le mélange et la circulation des particules. Il a été observé par les auteurs de la publication [4] que pour du sable d'Ottawa de taille variant de 0,42 à 0,83 mm, le rapport Di/D ne doit pas dépasser 0,35. Di étant le diamètre d'entrée de la base conique et D le diamètre de la section cylindrique.

La deuxième catégorie de réacteurs est celle des réacteurs à jet conique, ces réacteurs se caractérisent par une structure de lit et une hydrodynamique différentes des réacteurs à jet classique. A la différence d'un réacteur à jet classique, un réacteur à jet conique fonctionne avec un lit de particules qui se répartit essentiellement dans la zone conique et la zone cylindrique au-dessus de la zone conique est réduite.

Les conditions de stabilité pour ce type de réacteur ont été rappelées dans la référence [6]. De même que pour les réacteurs à jet classiques, le diamètre de la conduite d'entrée Do ne doit pas excéder 60 fois le diamètre moyen des particules afin de favoriser le fonctionnement en régime de jet stable. On retient de ces travaux que des diamètres Do et Di plus faibles favorisent l'accès au régime de jet stable ce qui optimise le taux de circulation des particules et les transferts de masse et de chaleur [7]. Des diamètres d'entrée plus faibles diminuent aussi la vitesse nécessaire à la fluidisation [6] et élargissent la zone de jet stable notamment pour les plus fines particules [5].

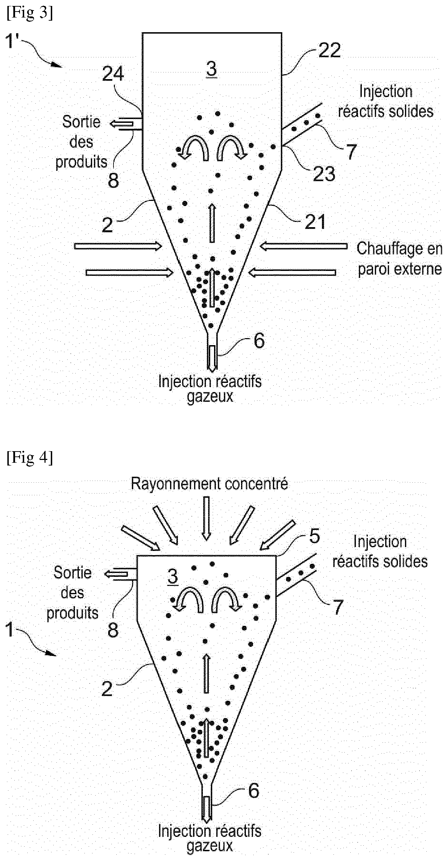

Plusieurs réacteurs à jet conique mettant en œuvre des réactions thermochimiques de pyrolyse et de gazéification ont été étudiés dans la littérature : [8], [9] [10]. Tous ces réacteurs fonctionnent à des températures inférieures à celle de la fusion des cendres. Les cendres sont donc évacuées sous forme solide avec le gaz de synthèse puis sont filtrées. On a représenté en figure 3, un exemple de réacteur 1 à jet conique à chauffage externe. La chambre de réaction 3 est ici délimitée par une enveloppe 2 dont la partie inférieure 21 est un cône droit et la partie supérieure 22 est un cylindre droit borgne. Le cône 21 est prolongé à son sommet vers le bas par une entrée 6 dans laquelle sont injectés les réactifs gazeux. Le cylindre borgne 22 est quant à lui percé de deux perçages 23, 24 dont l'un débouche sur un tube 7 d'injection des réactifs solides et l'autre débouche sur un tube 8 par lequel les produits de la réaction sont évacués. Comme symbolisé par les flèches, le jet de gaz réactifs est projeté dans la chambre de réaction 3 et met en suspension les particules des réactifs solides injectées par le tube 7. Comme illustré sur cette figure 3, le chauffage est apporté par l'extérieur du cône 21.

Dans le cadre des travaux de thèse [11], qui représente la base de la forme en deux parties des revendications indépendantes 1 et 6, un nouveau type de réacteur solaire a été mis au point: il reprend le principe de fonctionnement d'un réacteur à jet conique avec, en lieu et place d'un chauffage externe sur l'enveloppe, un apport de chaleur qui est fait par le rayonnement solaire concentré vers le fond borgne 5 du cylindre de l'enveloppe 2. Ce réacteur solaire à jet conique 1, illustré en figure 4, est destiné à la gazéification de biomasse répond aux contraintes des autres types de réacteurs avec de relativement bons transferts de chaleur et de matières, une fluidisation des particules robuste et des temps de séjours importants au moins pour la partie solide.

Un réacteur solaire à jet utilise donc l'énergie solaire concentrée, de 1000 à 10 000 soleils, pour convertir toutes sortes de matières carbonées (plastiques, CSR (Combustibles Solides de Récupération), biomasse etc...) en un gaz de synthèse à haut pouvoir calorifique. Les produits formés sous forme de gaz (H₂,CO,CO₂,CH₄,CnHm) sortent du réacteur par une conduite d'évacuation, puis sont filtrés, lavés et enfin utilisés directement pour produire de la chaleur, de l'électricité, ou des carburants liquides.

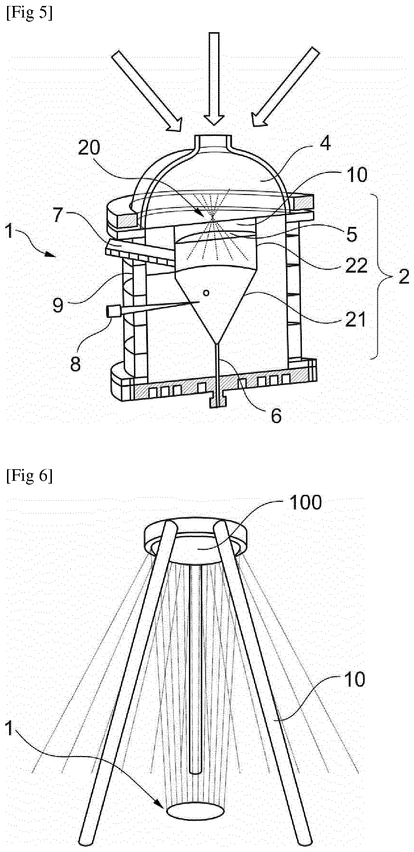

La demanderesse a également déjà conçu et réalisé un réacteur solaire à jet conique à mode de chauffage indirect. Ce réacteur solaire 1 est montré en figure 5 : il reprend les différents composants déjà explicités en référence avec la figure 4, avec en outre un corps 9 constitué par une double enveloppe dans laquelle est logée l'enveloppe 2 délimitant la chambre de réaction 3, et sur le dessus par un hublot transparent 4 de concentration du rayonnement solaire qui est maintenu par bride. On distingue également une pièce formant un chapeau 10 en matériau céramique qui vient coiffer le dessus de l'enveloppe 2. Comme symbolisé, ce chapeau 10 limite les pertes radiatives vers l'extérieur de la cavité du corps logeant l'enveloppe 2 et délimite l'ouverture 20, placée au niveau du point focal du hublot 4, qui laisse entrer le flux solaire en direction de la plaque de transfert de chaleur 5 qui constitue le fond du cylindre borgne 22.

Comme montré schématiquement sur la figure 6, il est envisagé d'agencer le réacteur solaire 1 au point focal bas d'un concentrateur thermique solaire à faisceau descendant, aussi désigné par « beam-down » en anglo-saxon, qui comprend un système de réflecteur primaire d'une pluralité d'héliostats non représentés. Ces héliostats focalisent la lumière du soleil vers un réflecteur central secondaire 100 au sommet d'une tour 10, qui redirige la lumière du soleil qui provient des héliostats vers un récepteur au sol au point focal bas.

Un tel réacteur solaire à jet conique 1 présente globalement de bonnes performances pour la conversion thermochimique visée.

Afin de maximiser la concentration en H2, favoriser les réactions de craquage des goudrons, le reformage du CH4 et éviter les dépôts de particules/fumées sur le hublot transparent, ce réacteur fonctionne à des températures supérieures à 1200°C [12]. L'entrée 6 par laquelle un mélange de gaz d'entraînement, qui est de l'argon Ar, et de gaz oxydant, qui est de la vapeur d'eau H₂O, est introduit dans la chambre de réaction 23 est un unique tube creux de diamètre intérieur égal à 2 mm. Un jet de ce mélange sort à une vitesse d'environ 9 m/s et entraine les particules de biomasse vers le haut puis ces particules redescendent de manière cyclique et stable. Le bon fonctionnement de ce réacteur pour une biomasse qui contient très peu de cendres (<1%) a été validé : [13], [14].

La demanderesse a souhaité que ce réacteur solaire à jet conique fonctionne avec des charges riches en matière minérale. Avec un tel fonctionnement, il s'est posé la problématique du traitement des cendres.

En effet, dans le volume du réacteur, des particules de biomasse sont injectées de manière continue et du fait de la gravité, elles tombent au fond du cône. Ces particules réagissent à haute température (1200°C) avec le gaz réactif oxydant et se transforment en gaz. Si la biomasse contient beaucoup de cendres, ces cendres fondent et s'agglomèrent vers l'entrée du jet.

De fait, aucun réacteur à jet conique de gazéification n'a à ce jour été proposé pour gérer des cendres qui s'agglomèrent, en fusion. Dans le cas où la température de fonctionnement du réacteur est supérieure à la température de ramollissement des cendres, les inventeurs ont pu observer que ces dernières s'accumulent au niveau de l'entrée 6 du jet en entravant le passage du gaz.

Pour des réacteurs à jet classique, il a déjà été proposé une variante de réacteur qui consiste à élargir le diamètre d'entrée Do, afin que les cendres agglomérantes dont la température est environ de 1150°C soient évacuées : [15]. Comme expliqué dans les deux premiers paragraphes de cette publication [15], un diamètre plus grand dégrade la circulation des particules et nécessite un débit de gaz de jet plus important pour arriver à un jet stable des particules. Or, cela pénalise le temps de séjour gaz, et donc la concentration en gaz de synthèse (H2 et CO), et aussi le rendement solaire dans le cas d'un réacteur solaire, car une partie de l'énergie solaire serait inutilement utilisée pour chauffer le gaz d'entrainement.

Il existe donc un besoin pour améliorer les réacteurs solaires à jet conique notamment, afin à la fois d'assurer un jet stable de particules et une évacuation continue des cendres agglomérantes, en fusion en dehors de la chambre de réaction.

Le but de l'invention est de répondre au moins en partie à ce besoin.

### Exposé de l'invention

Pour ce faire, l'invention concerne, sous l'un de ses aspects, un réacteur solaire comprenant une enveloppe délimitant une chambre de réaction, l'enveloppe comprenant une partie inférieure sous la forme d'un cône droit prolongé à son sommet par une entrée d'injection de réactifs gazeux et une partie supérieure sous la forme d'un cylindre droit borgne, le cône et/ou la surface latérale du cylindre borgne comprenant deux perçages latéraux dont un est prolongé par un tube d'injection de réactifs solides et l'autre est prolongé par un tube de sortie de produits issus de la réaction, au moins une partie de l'enveloppe étant destinée à recevoir le rayonnement solaire, l'entrée comprenant deux tubes coaxiaux dont celui central est destiné à l'injection d'au moins la majorité des réactifs gazeux, tandis que celui périphérique est destiné à l'injection d'un gaz auxiliaire d'entraînement et à la récupération par gravité des cendres issues de la réaction.

La partie destinée à recevoir le rayonnement solaire peut être le fond du cylindre ou le cône de l'enveloppe. En effet, comme explicité ci-après, l'invention permet d'envisager d'implanter le réacteur solaire en haut d'une tour d'une centrale solaire à tour avec un chauffage direct de la paroi du cône par les rayonnements concentrés par les héliostats. Selon une variante de réalisation avantageuse, le tube central de l'entrée est débouchant à l'intérieur du cône au-delà de la base inférieure de ce dernier. Cette variante permet d'éviter que les cendres ne se déposent sur le tube central d'injection des réactifs gazeux. Autrement dit, grâce à cette géométrie, on garantit encore mieux que les cendres liquides ne peuvent s'écouler le long du tube d'entrée de gaz principal, sous peine qu'elles se solidifient et bouchent l'entrée de gaz.

Selon une autre variante avantageuse, l'angle du cône est compris entre 28° et 60°. Un tel angle de cône plus faible que celui selon l'état de l'art peut permettre d'accélérer l'évacuation des cendres et limiter tout risque d'accumulation de ces dernières.

De préférence, les tubes coaxiaux de l'entrée, le cône et la surface latérale du cylindre délimitant la chambre de réaction sont en un même alliage métallique résistant à haute température, de préférence un alliage fer-chrome-aluminium tandis que le fond du cylindre est en carbure de silicium (SiC).

L'invention a également pour objet, un procédé de fonctionnement d'un réacteur solaire destiné à la conversion thermochimique d'une charge carbonée, le réacteur comprenant une enveloppe délimitant une chambre de réaction, l'enveloppe comprenant une partie inférieure sous la forme d'un cône droit prolongé à son sommet par un tube d'injection de réactifs gazeux et une partie supérieure sous la forme d'un cylindre droit borgne, au moins une partie de l'enveloppe étant destinée à recevoir le rayonnement solaire, le cône et/ou la surface latérale du cylindre borgne comprenant deux perçages latéraux dont un est prolongé par un tube d'injection de réactifs solides et l'autre est prolongé par un tube de sortie de produits issus de la réaction, l'entrée comprenant deux tubes coaxiaux.

Le procédé selon l'invention comprend les étapes suivantes :
- on injecte par le tube central de l'entrée au moins la majorité des réactifs gazeux,
- on injecte par le tube périphérique de l'entrée, un gaz auxiliaire d'entraînement,
- on récupère par gravité dans le tube périphérique de l'entrée les cendres en fusion issues de la réaction.

Le gaz auxiliaire d'entraînement qui aide à la formation du jet, peut être un gaz neutre et/ou une minorité des réactifs gazeux. Par « minorité », on entend un débit moindre que celui des réactifs gazeux qui est injecté par le tube central. Le gaz auxiliaire peut être un gaz neutre tel que de l'argon ou du N₂, ou du CO₂.

Ainsi, on peut bien envoyer une partie du gaz oxydant dans le tube central et le reste du gaz oxydant dans le tube périphérique. On veille à ce que le débit auxiliaire dans ce tube périphérique soit suffisant pour que les particules de réactifs solides telles que la biomasse ne s'échappent pas vers le bas de manière à ce qu'elles restent à l'intérieur du cône le plus longtemps possible. Le débit nécessaire d'injection auxiliaire dans le tube périphérique dépend du diamètre de ce dernier : on s'assure que la vitesse de gaz auxiliaire à l'entrée du cône soit suffisamment élevée pour que les particules soient soulevées par le flux d'injection gazeux par le tube central. Le tube périphérique doit avoir une section de passage suffisante pour évacuer les cendres en fusion. Le diamètre de cette conduite dépend donc du taux de cendres de la charge carbonée et du débit d'injection.

Pour de la gazéification de matière carbonée (biomasse/charbon/plastique), la vapeur d'eau H₂O est le gaz oxydant, injecté dans le tube principal, qui convertit la matière carbonée en H2 et CO. La température d'entrée de gaz dépend de la manière dont le réacteur est chauffé. Si, le chauffage du réacteur a lieu par le haut, c'est-à-dire par le fond du cylindre borgne, cette température risque d'être plus faible que si le réacteur est chauffé par le côté de l'enveloppe. A titre d'exemple indicatif, sur un réacteur solaire à jet 1 tel que représenté en figure 5, i.e. avec un mode de chauffage par le haut, et sans préchauffage des gaz en entrée du réacteur, cette température est de l'ordre de 400°C avec une vitesse d'injection des gaz réactifs comprise de préférence entre 4 m/s et 9m/s.

De préférence, la température de fonctionnement du réacteur solaire est supérieure à 1100°C. On garantit ainsi que les cendres sont bien en fusion et qu'elles s'écoulent par gravité sous forme liquide dans le tube périphérique de l'entrée en bas du cône. Un ou plusieurs thermocouples agencés dans la chambre de réaction peuvent avantageusement mesurer instantanément la température de celle-ci à différents endroits et ainsi s'assurer que les cendres sont bien à l'état liquide tout le long du cône.

Avantageusement, on injecte par le tube des particules de réactifs solides dont le diamètre est inférieur ou égal à 1 cm.

L'invention consiste donc essentiellement à réaliser un réacteur à jet solaire avec une entrée en bas du cône de l'enveloppe qui est divisée en deux tubes coaxiaux, celui central étant destiné à injecter la partie substantielle voire la totalité des gaz réactifs oxydants de la réaction visée, celui périphérique étant destiné à l'injection d'un gaz auxiliaire d'entraînement qui participe à la formation du jet, et à la récupération des cendres en fusion issues de la réaction.

Ainsi, la nouvelle configuration de réacteur selon l'invention permet d'évacuer en continu, i.e. pendant toute la durée de fonctionnement du réacteur, les cendres en fusion issues de la réaction, de former un jet stable pour les particules réactives tout en optimisant le débit de gaz d'entrainement.

La géométrie proposée selon l'invention permet la formation d'une goutte de cendres en fusion tout au long de la période de fonctionnement. En dimensionnant le cône droit pour que son extrémité soit dans le tube d'entrée de gaz auxiliaire, on garantit que les cendres liquides ne puissent s'écouler le long du tube d'entrée de gaz principal et on évite ainsi qu'elles se solidifient et bouchent l'entrée de gaz.

L'invention a également pour objet l'utilisation du réacteur solaire ou du procédé décrit précédemment pour la gazéification d'une charge carbonée en produits de réaction, en particulier pour la gazéification d'une biomasse, et notamment d'une biomasse ligno-cellulosique.

L'invention concerne enfin une centrale solaire à tour dans laquelle est agencé à son sommet au moins un réacteur solaire décrit précédemment de telle sorte que les rayonnements concentrés provenant d'héliostats, permettent de chauffer directement le cône de l'enveloppe du réacteur.

D'autres avantages et caractéristiques de l'invention ressortiront mieux à la lecture de la description détaillée d'exemples de mise en œuvre de l'invention faite à titre illustratif et non limitatif en référence aux figures suivantes.

### Brève description des dessins

[Fig 1] est une vue schématique en coupe longitudinale d'un réacteur solaire selon l'état de l'art à mode de chauffage direct.
[Fig 2] est une vue schématique en coupe longitudinale d'un réacteur solaire selon l'état de l'art à mode de chauffage indirect.
[Fig 3] est une vue schématique en coupe longitudinale d'un réacteur à jet selon l'état de l'art à chauffage externe.
[Fig 4] est une vue schématique en coupe longitudinale d'un réacteur solaire à jet selon l'état de l'art à apport de chaleur par rayonnement solaire.
[Fig 5] est une vue schématique en coupe longitudinale d'un autre réacteur solaire à jet selon l'état de l'art à apport de chaleur par rayonnement solaire.
[Fig 6] est une vue schématique montrant l'agencement d'un réacteur solaire à jet selon l'état de l'art au point focal bas d'un concentrateur thermique solaire à faisceau descendant.
[Fig 7] est une vue en coupe longitudinale d'un réacteur solaire à jet selon l'invention.
[Fig 8] est une vue de simulations numériques hydrodynamiques d'un réacteur solaire à jet selon l'invention, sous différents débits de gaz auxiliaire d'entraînement.
[Fig 9] est une vue en coupe longitudinale d'un mode de réalisation avantageux de réacteur solaire à jet selon l'invention.
[Fig 9A] est une vue de détail en coupe longitudinale du réacteur selon la figure 9.
[Fig 10] est une vue schématique de l'implantation en haut d'une tour d'une centrale solaire à tour, d'un réacteur solaire à jet selon l'invention.
[Fig 11] est une vue en perspective montrant également l'implantation d'un réacteur solaire dans une centrale solaire à tour.
[Fig 11A] est une vue de détail du haut de la tour de la figure 11 montrant la focalisation des rayonnements solaires concentrés sur le bas du réacteur.

### Description détaillée

Les figures 1 à 6 sont relatives à des exemples différents des réacteurs solaires et à jet selon l'état de l'art. Ces figures 1 à 6 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 11A.

Dans l'ensemble de la présente demande, les termes « inférieur », « supérieur », « bas », « haut », « dessous » et « dessus » sont à comprendre par référence par rapport à un réacteur à jet solaire agencé avec son axe longitudinal à la verticale.

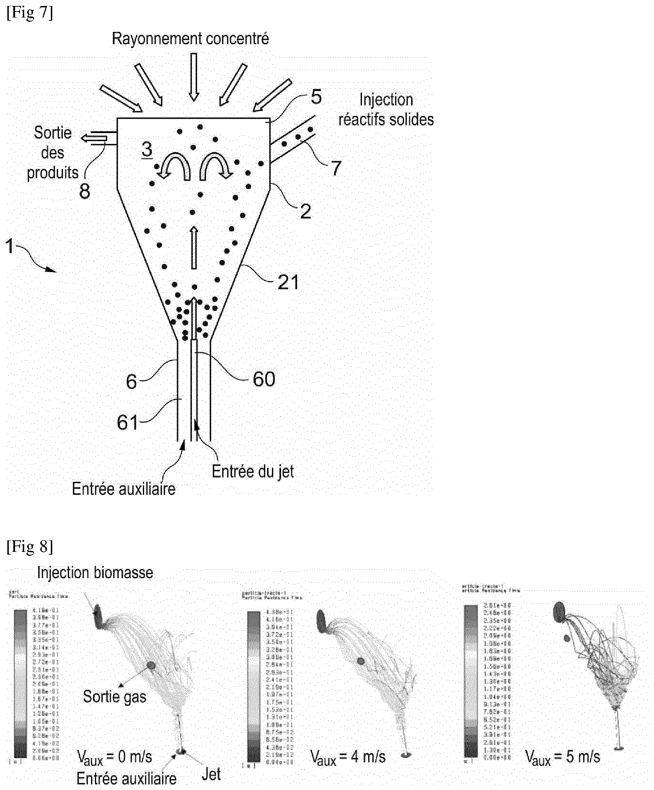

On a représenté en figure 7, un premier exemple de réacteur solaire 1 tel qu'il fonctionne lors de l'injection des gaz réactifs et des réactifs solides.

Ce réacteur 1 comprend une enveloppe 2 délimitant une chambre de réaction 3 dans laquelle une réaction chimique endothermique, telle qu'une gazéification de biomasse, doit avoir lieu.

La partie inférieure 21 de l'enveloppe 2 est un cône droit prolongé à son sommet par une entrée 6 d'injection de réactifs gazeux et la partie supérieure 22 est un cylindre droit borgne. Un tube 7 d'injection de réactifs solides débouche également dans la chambre de réaction 3 ainsi qu'un tube 8 par lequel les produits issus de la réaction dont évacués.

Le fond 5 du cylindre borgne constitue la paroi de transfert thermique sur laquelle le rayonnement solaire concentré.

Selon l'invention, l'entrée 6 comprend deux tubes coaxiaux 60, 61. Le tube central 60 est destiné à l'injection des réactifs gazeux. Le tube périphérique 61 est destiné à l'injection d'un gaz auxiliaire d'entraînement et à la récupération par gravité des cendres issues de la réaction.

L'ensemble de l'enveloppe 2 à l'exception du fond et les tubes coaxiaux 60, 61 est en un alliage Fe-Cr-Al tandis que le fond 5 est en carbure de silicium (SiC).

Le réacteur solaire 1 avec cette entrée de gaz 6 à double-tubes 60, 61 permet à la fois d'assurer un jet stable des particules solides et une évacuation continue des cendres en fusion. La vitesse en sortie de l'orifice du tube principal central 60 est choisie telle que le gaz, typiquement un mélange de gaz neutre (Ar) et de vapeur d'eau en tant que gaz oxydant, soulève puis entraine les particules carbonées de la réaction visée. Le tube périphérique secondaire 61 permet d'évacuer les cendres en fusion en continu et un débit auxiliaire minimal y est injecté afin d'éviter que les plus grosses particules carbonées s'échappent vers le bas.

Les inventeurs ont validé la solution à deux tubes coaxiaux 60, 61 selon l'invention, par simulation numérique hydrodynamique sous le logiciel commercial Fluent^{©}. Trois simulations ont été réalisées et sont illustrées en figure 8. Le but de ces simulations était de suivre les trajectoires des particules de bois injectées à l'intérieur de la chambre de réaction 23, en fonction du temps de séjour, pour trois vitesses différentes de gaz auxiliaire injecté dans le tube périphérique 61. Pour ces simulations, les particules de bois sont sphériques, ont une masse volumique de 650kg/m³, un diamètre de 1 mm et elles ont été injectées avec un débit de 2g/min. La vitesse du jet de gaz oxydant dans le tube principal central 60 est de 9 m/s et le réacteur fonctionne à 1000°C, soit la température estimée du gaz en entrée du cône.

De ces simulations numériques, il ressort que pour Vaux=0 m/s, les particules sortent de la chambre de réaction par l'entrée auxiliaire de gaz à cause de la gravité 23 quelques instants après leur injection. Une vitesse Vaux=4 m/s permet difficilement de soulever les particules de bois injectées au niveau de la zone annulaire du cône tandis qu'une vitesse Vaux=5 m/s permet de maintenir les particules à la base du cône sans qu'elles ne s'échappent par l'entrée auxiliaire 61 du gaz.

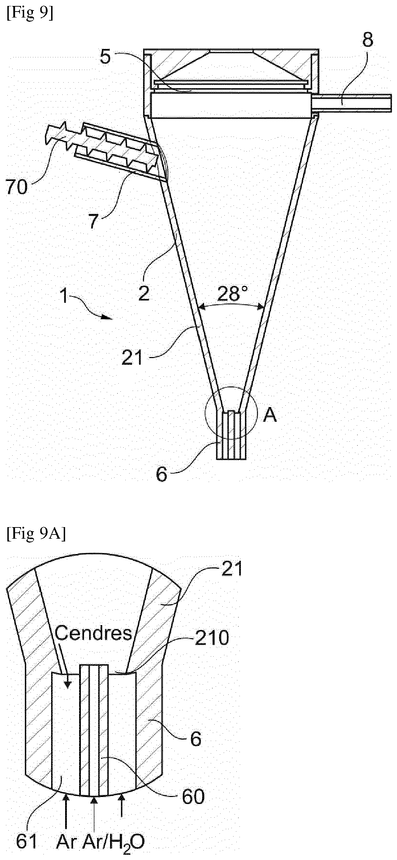

Les figures 9 et 9A illustrent un mode de réalisation selon lequel le cône 21 est bien prolongé dans le tube périphérique 61 d'entrée de gaz secondaire, de manière à ce que les cendres liquides ne puissent s'écouler le long du tube central 60. De plus, par sécurité, le tube central 60 fait saillie au-delà de la base inférieure 210 du cône 21 pour éviter que les cendres ne se déposent sur ce dernier. Comme montré également, l'angle de cône 21 est égal à 28° qui permet d'accélérer l'évacuation des cendres et limiter tout risque d'accumulation de ces dernières.

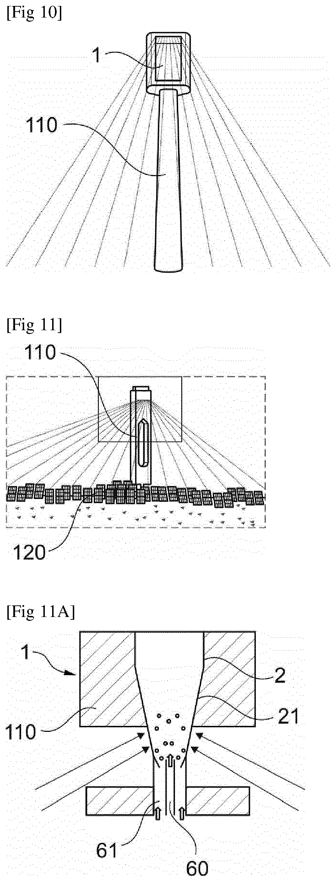

Les figures 10, 11 et 11A montrent un agencement possible d'un réacteur solaire 1 selon l'invention, selon lequel il est positionné en haut d'une tour solaire 110 d'une centrale solaire thermodynamique à tour qui peut être conventionnelle. Les rayonnements concentrés renvoyés par les héliostats 120 permettent de chauffer directement le cône 21 de l'enveloppe 2 du réacteur 1. Ceci a pour avantage d'atteindre des températures plus hautes comparativement à un chauffage par le fond 5 du cylindre borgne de l'enveloppe, et qui peuvent être réparties de manière plus homogène en bas du cône 21. Cela facilite encore davantage l'évacuation des cendres en fusion.

Dans la variante des figures 9 à 9A, le tube 7 d'injection des particules traverse la paroi latérale du cône 21.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

### Liste des références citées

[1]: Steinfeld, R. Palumbo, « Solar thermochemical process technology », Encyclopedia of physical science & technologie, R. A. Meyers Ed., Academic Press, 15, 237-256, 2001.
[2]:C. Agrafiotis, H.v. Storch, M. Roeb, C. Sattler, « Solar thermal reforming of methane feedstocks for hydrogen and syngas production »-A review, Renewable and Sustainable Energy Reviews, 29, 2014, 656-682.
[3]: M. Puig-Arnavat, E.A. Tora, J.C. Bruno, A. Coronas, « State of the art on reactors design for solar gasification of carbonaceous feedstock », Solar Energy, 97, 2013, 67-84.
[4]: Mathur et g, « A technique for contacting gases with coarse solid particles - Mathur - 1955 - AIChE Journal - Wiley Online Library ». [En ligne]. Disponible sur: http://onlinelibrary.wiley.com/doi/10.1002/aic.690010205/abstract.
[5]: P. P. Chandnani et N. Epstein, « Spoutability and spout destabilization of fine particles with a gas », Proc. Fluid. V, 1986.
[6] : M. Olazar, M. J. San Jose, A. T. Aguayo, J. M. Arandes, et J. Bilbao, « Stable operation conditions for gas-solid contact regimes in conical spouted beds », Ind. Eng. Chem. Res., vol. 31, no 7, p. 1784-1792, juill. 1992.
[7] : A. R. Fernandez-Akarregi, J. Makibar, G. Lopez, M. Amutio, et M. Olazar, « Design and operation of a conical spouted bed reactor pilot plant (25kg/h) for biomass fast pyrolysis», Fuel Process. Technol., vol. 112, p. 48-56, août 2013.
[8]: Aguado, M. Olazar, San José Maria José, G. Aguirre, et J. Bilbao, « Pyrolysis of Sawdust in a Conical Spouted Bed Reactor. Yields and Product Composition », Ind. Eng. Chem. Res., vol. 39, no 6, p. 1925-1933, juin 2000.
[9] : G. Lopez, A. Erkiaga, M. Amutio, J. Bilbao, et M. Olazar, « Effect of polyethylene co-feeding in the steam gasification of biomass in a conical spouted bed reactor », Fuel, vol. 153, p. 393-401, août 2015.
[10] : M. Cortazar, G. Lopez, J. Alvarez, M. Amutio, J. Bilbao, et M. Olazar, « Advantages of confining the fountain in a conical spouted bed reactor for biomass steam gasification », Energy, vol. 153, p. 455-463, juin 2018.
[11] : Bellouard Q., « *Valorisation de biomasse en vecteur énergétique par voie thermochimique solaire* », thèse, 2016.
[12] : S. Chuayboon, S. Abanades, et S. Rodat, « Experimental analysis of continuous steam gasification of wood biomass for syngas production in a high-temperature particle-fed solar reactor », Chem. Eng. Process. - Process Intensif., vol. 125, p. 253-265, mars 2018.
[13] : Q. Bellouard, S. Abanades, et S. Rodat, « Biomass Gasification in an Innovative Spouted-Bed Solar Reactor: Experimental Proof of Concept and Parametric Study », Energy Fuels, vol. 31, no 10, p. 10933-10945, oct. 2017.
[14] : Q. Bellouard, S. Rodat, S. Abanades, S. Ravel, et P.-É. Frayssines, « Design, simulation and experimental study of a directly-irradiated solar chemical reactor for hydrogen and syngas production from continuous solar-driven wood biomass gasification », Int. J. Hydrog. Energy, mai 2018.
[15] : K. Kikuchi, A. Suzuki, T. Mochizuki, S. Endo, E. Imai, et Y. Tanji, « Ash-agglomerating gasification of coal in a spouted bed reactor », Fuel, vol. 64, no 3, p. 368-372, mars 1985.

## Revendications

1. Réacteur solaire (1) comprenant une enveloppe (2) délimitant une chambre de réaction (3), l'enveloppe comprenant une partie inférieure (21) sous la forme d'un cône droit prolongé à son sommet par une entrée (6) et une partie supérieure (22) sous la forme d'un cylindre droit borgne (22), au moins une partie de l'enveloppe étant destinée à recevoir le rayonnement solaire, le cône et/ou la surface latérale du cylindre borgne comprenant deux perçages latéraux dont un est prolongé par un tube (7) d'injection de réactifs solides et l'autre est prolongé par un tube (8) de sortie de produits issus de la réaction, l'entrée (6) comprenant deux tubes coaxiaux dont celui central (60) est destiné à l'injection d'au moins la majorité des réactifs gazeux, tandis que celui périphérique (61) est destiné à l'injection d'un gaz auxiliaire d'entraînement,
le réacteur solaire étant **caractérisé en ce que**
le tube périphérique (61) est également destiné à la récupération par gravité des cendres issues de la réaction.

2. Réacteur solaire (1) selon la revendication 1, la partie destinée à recevoir le rayonnement solaire étant le fond (5) du cylindre ou le cône (21) de l'enveloppe.

3. Réacteur solaire (1) selon la revendication 1 ou 2, le tube central (60) de l'entrée (6)
étant débouchant à l'intérieur du cône au-delà de la base inférieure (210) de ce dernier.

4. Réacteur solaire (1) selon l'une des revendications précédentes, l'angle du cône (21) étant compris entre 28° et 60°.

5. Réacteur solaire (1) selon l'une des revendications précédentes, les tubes coaxiaux (60, 61) de l'entrée (6), le cône et la surface latérale du cylindre délimitant la chambre de réaction étant en un même alliage métallique résistant à haute température, de préférence un alliage fer-chrome-aluminium tandis que le fond du cylindre est en carbure de silicium (SiC).

6. Procédé de fonctionnement d'un réacteur solaire (1) destiné à la conversion thermochimique d'une charge carbonée, le réacteur comprenant une enveloppe (2) délimitant une chambre de réaction (3), l'enveloppe comprenant une partie inférieure (21) sous la forme d'un cône droit prolongé à son sommet par une entrée (6) et une partie supérieure (22) sous la forme d'un cylindre droit borgne (22), au moins une partie de l'enveloppe étant destinée à recevoir le rayonnement solaire, le cône et/ou la surface latérale du cylindre borgne comprenant deux perçages latéraux dont un est prolongé par un tube (7) d'injection de réactifs solides et l'autre est prolongé par un tube (8) de sortie de produits issus de la réaction, l'entrée (6) comprenant deux tubes coaxiaux, procédé comprenant les étapes suivantes :
- on injecte par le tube central (60) de l'entrée (6) au moins la majorité des réactifs gazeux,
- on injecte par le tube périphérique (61) de l'entrée (6), un gaz auxiliaire d'entraînement,
le procédé étant **caractérisé en ce que**
- on récupère par gravité dans le tube périphérique (61) de l'entrée (6) les cendres en fusion issues de la réaction.

7. Procédé selon la revendication 6, le gaz auxiliaire d'entraînement étant un gaz neutre et/ou une minorité des réactifs gazeux.

8. Procédé selon la revendication 6 ou 7, la température de fonctionnement du réacteur solaire est supérieure à 1100°C.

9. Procédé selon l'une des revendications 6 à 8, selon lequel on injecte par le tube (7) des particules de réactifs solides dont le diamètre est inférieur ou égal à 1 cm.

10. Utilisation du réacteur solaire (1) selon l'une des revendications 1 à 5 ou du procédé selon l'une des revendications 6 à 9, pour la gazéification d'une charge carbonée en produits de réaction, en particulier pour la gazéification d'une biomasse, et notamment d'une biomasse ligno-cellulosique.

11. Centrale solaire à tour (110) dans laquelle est agencé à son sommet au moins un réacteur solaire (1) selon l'une des revendications 1 à 5, de telle sorte que les rayonnements concentrés provenant d'héliostats (120), permettent de chauffer directement le cône (21) de l'enveloppe (2) du réacteur.

## Patentansprüche

1. Solarreaktor (1), umfassend ein Gehäuse (2), das eine Reaktionskammer (3) begrenzt, wobei das Gehäuse einen unteren Teil (21) in Form eines geraden Kegelstumpfs, der an seiner Spitze durch einen Einlass (6) verlängert ist, und einen oberen Teil (22) in Form eines geraden Blindzylinders (22) umfasst, wobei mindestens ein Teil des Gehäuses dafür ausgelegt ist, die Sonnenstrahlung aufzunehmen, wobei der Kegelstumpf und/oder die Mantelfläche des Blindzylinders zwei seitliche Bohrungen umfasst bzw. umfassen, von denen eine mit einer Röhre (7) zum Einspritzen fester Reagenzien und die andere mit einer Auslassröhre (8) für die aus der Reaktion resultierenden Produkte verlängert ist, wobei der Einlass (6) zwei koaxiale Röhren aufweist, von denen die mittige (60) zum Einspritzen zumindest des größeren Teils der gasförmigen Reaktanten bestimmt ist, während die äußere (61) zum Einspritzen eines Mitnahme-Hilfsgases bestimmt ist, wobei der Solarreaktor **dadurch gekennzeichnet ist, dass** die äußere Röhre (61) ferner zur Rückgewinnung der aus der Reaktion resultierenden Aschen durch Schwerkraft bestimmt ist.

2. Solarreaktor (1) nach Anspruch 1, wobei es sich bei dem zum Aufnehmen der Sonnenstrahlung bestimmten Teil um den Boden (5) des Zylinders oder des Kegelstumpfs (21) des Gehäuses handelt.

3. Solarreaktor (1) nach Anspruch 1 oder 2, wobei die mittige Röhre (60) des Einlasses (60) im Inneren des Kegelstumpfs über dessen untere Basis (210) hinaus mündet.

4. Solarreaktor (1) nach einem der vorhergehenden Ansprüche, wobei der Winkel des Kegelstumpfs (21) zwischen 28° und 60° beträgt.

5. Solarreaktor (1) nach einem der vorhergehenden Ansprüche, wobei die koaxialen Röhren (60, 61) des Einlasses (6), der Kegelstumpf und die Mantelfläche des Zylinders, die die Reaktionskammer begrenzen, aus derselben hochtemperaturbeständigen Metalllegierung, vorzugsweise aus einer Eisen-Chrom-Aluminium-Legierung, bestehen, während der Boden des Zylinders aus Siliziumkarbid (SiC) besteht.

6. Verfahren zum Betreiben eines Solarreaktors (1) zur thermochemische Umwandlung einer kohlenstoffhaltigen Beschickung, wobei der Reaktor ein Gehäuse (2) umfasst, das eine Reaktionskammer (3) begrenzt, wobei das Gehäuse einen unteren Teil (21) in Form eines geraden Kegelstumpfs, der an seiner Spitze durch einen Einlass (6) verlängert ist, und einen oberen Teil (22) in Form eines geraden Blindzylinders (22) umfasst, wobei mindestens ein Teil des Gehäuses dafür ausgelegt ist, die Sonnenstrahlung aufzunehmen, wobei der Kegelstumpf und/oder die Mantelfläche des Blindzylinders zwei seitliche Bohrungen umfasst bzw. umfassen, von denen eine mit einer Röhre (7) zum Einspritzen fester Reagenzien und die andere mit einer Auslassröhre (8) für die aus der Reaktion resultierenden Produkte verlängert ist, wobei der Einlass (6) zwei koaxiale Röhren umfasst, wobei das Verfahren die folgenden Schritte umfasst:
- Einspritzen mindestens des größeren Teils der gasförmigen Reagenzien durch die mittige Röhre (60) des Einlasses (6),
- Einspritzen eines Mitnahme-Hilfsgases durch die äußere Röhre (61) des Einlasses (6),
wobei das Verfahren **dadurch gekennzeichnet ist, dass** in der äußeren Röhre (61) des Einlasses (6) die aus der Reaktion resultierenden schmelzflüssigen Aschen mittels Schwerkraft rückgewonnen werden.

7. Verfahren nach Anspruch 6, wobei das Mitnahme-Hilfsgas ein neutrales Gas und/oder ein kleinerer Teil der gasförmigen Reaktanten ist.

8. Verfahren nach Anspruch 6 oder 7, wobei die Betriebstemperatur des Solarreaktors höher als 1100 °C ist.

9. Verfahren nach einem der Ansprüche 6 bis 8, wobei durch die Röhre (7) feste Reaktandenpartikel injiziert werden, deren Durchmesser weniger als oder gleich 1 cm beträgt.

10. Verwendung des Solarreaktors (1) nach einem der Ansprüche 1 bis 5 oder des Verfahrens nach einem der Ansprüche 6 bis 9 zur Karbonisierung einer kohlenstoffhaltigen Beschickung zu Reaktionsprodukten, insbesondere zur Karbonisierung einer Biomasse und insbesondere einer lignozellulosehaltigen Biomasse.

11. Solarturmkraftwerk (110), an dessen Spitze mindestens ein Solarreaktor (1) nach einem der Ansprüche 1 bis 5 angeordnet ist, so dass durch die von Heliostaten (120) stammenden konzentrierten Strahlen direkt der Kegelstumpf (21) des Gehäuses (2) des Reaktors erhitzt werden kann.

## Claims

1. Solar reactor (1) comprising a casing (2) delimiting a reaction chamber (3), the casing comprising a lower part (21) in the form of a right cone extended at its apex by an inlet (6) and an upper part (22) in the form of a blind right cylinder (22), at least a part of the casing being intended to receive solar radiation, the cone and/or the lateral surface of the blind cylinder comprising two lateral drilled holes of which one is extended by a tube (7) for injecting solid reactants and the other is extended by an outlet tube (8) for products resulting from the reaction, the inlet (6) comprising two coaxial tubes of which the central one (60) is intended for the injection of at least the majority of the gaseous reactants, while the peripheral one (61) is intended for the injection of an auxiliary entraining gas, the solar reactor being **characterized in that** the peripheral tube (61) is also intended for the recovery by gravity of ash resulting from the reaction.

2. Solar reactor (1) according to Claim 1, the part intended to receive solar radiation being the bottom (5) of the cylinder or the cone (21) of the casing.

3. Solar reactor (1) according to Claim 1 or 2, the central tube (60) of the inlet (6) opening inside the cone beyond the lower base (210) of the latter.

4. Solar reactor (1) according to one of the preceding claims, the angle of the cone (21) being between 28° and 60°.

5. Solar reactor (1) according to one of the preceding claims, the coaxial tubes (60, 61) of the inlet (6), the cone and the lateral surface of the cylinder delimiting the reaction chamber being made of a single metal alloy resistant to high temperature, preferably an iron-chromium-aluminium alloy, while the bottom of the cylinder is made of silicon carbide (SiC).

6. Method for operating a solar reactor (1) intended for the thermochemical conversion of a carbon-based feedstock, the reactor comprising a casing (2) delimiting a reaction chamber (3), the casing comprising a lower part (21) in the form of a right cone extended at its apex by an inlet (6) and an upper part (22) in the form of a blind right cylinder (22), at least a part of the casing being intended to receive solar radiation, the cone and/or the lateral surface of the blind cylinder comprising two lateral drilled holes of which one is extended by a tube (7) for injecting solid reactants and the other is extended by an outlet tube (8) for products resulting from the reaction, the inlet (6) comprising two coaxial tubes, the method comprising the following steps:
- at least the majority of the gaseous reactants are injected via the central tube (60) of the inlet (6),
- an auxiliary entraining gas is injected via the peripheral tube (61) of the inlet (6),
the method being **characterized in that** the molten ash resulting from the reaction is recovered by gravity in the peripheral tube (61) of the inlet (6).

7. Method according to Claim 6, the auxiliary entraining gas being a neutral gas and/or a minority of the gaseous reactants.

8. Method according to Claim 6 or 7, the operating temperature of the solar reactor being greater than 1100°.

9. Method according to one of Claims 6 to 8, wherein particles of solid reactants of which the diameter is less than or equal to 1 cm are injected via the tube (7).

10. Use of the solar reactor (1) according to one of Claims 1 to 5 or of the method according to one of Claims 6 to 9, for the gasification of a carbon-based feedstock with reaction products, in particular for the gasification of a biomass, and in particular of a lignocellulosic biomass.

11. Solar power plant with a tower (110) in which is arranged, at the top thereof, at least one solar reactor (1) according to one of Claims 1 to 5, such that concentrated radiation coming from heliostats (120) makes it possible to directly heat the cone (21) of the casing (2) of the reactor.
